(19) Europäisches Patentamt
European Patent Office
Office européen des brevets

(11) **EP 2 801 261 B1**

(12) **EUROPEAN PATENT SPECIFICATION**

(45) Date of publication and mention
of the grant of the patent:
**05.08.2020   Bulletin 2020/32**

(51) Int Cl.:
*A23G 9/08* *(2006.01)*      *A23G 9/26* *(2006.01)*
*A23G 9/28* *(2006.01)*      *A23G 9/46* *(2006.01)*
*A23G 9/50* *(2006.01)*

(21) Application number: **14167628.8**

(22) Date of filing: **09.05.2014**

(54) **Method and system for making ice cream on a stick and machine for making and dispensing a liquid or semiliquid product for making ice cream on a stick**

Verfahren und System zur Herstellung von Speiseeis an einem Stiel und Maschine zur Herstellung und Ausgabe eines flüssigen oder halbflüssigen Produkts zur Herstellung von Speiseeis am Stiel

Procédé et système pour confectionner une crème glacée sur un bâtonnet et machine de fabrication et de distribution d'un produit liquide ou semi-liquide pour confectionner une crème glacée sur un bâtonnet

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **10.05.2013   IT BO20130213**

(43) Date of publication of application:
**12.11.2014   Bulletin 2014/46**

(73) Proprietor: **ALI GROUP S.r.l. - CARPIGIANI**
**20063 Cernusco Sul Naviglio (MI) (IT)**

(72) Inventors:
• **Cocchi, Andrea**
**40012 Calderara di Reno (Bologna) (IT)**
• **Lazzarini, Roberto**
**42100 Reggio Emilia (IT)**

(74) Representative: **Milli, Simone**
**Bugnion S.p.A.**
**Via di Corticella, 87**
**40128 Bologna (IT)**

(56) References cited:
**EP-A1- 1 597 974**      **EP-A1- 2 491 792**
**EP-A1- 2 541 165**      **WO-A1-99/03358**
**WO-A1-2005/099475**      **GB-A- 1 371 726**
**GB-A- 2 245 474**      **GB-A- 2 254 035**
**US-A- 2 866 420**      **US-A- 3 261 178**
**US-A- 3 632 245**      **US-A- 4 699 583**
**US-A- 4 759 197**      **US-A- 4 964 542**
**US-A- 5 158 506**      **US-A1- 2001 009 097**
**US-A1- 2003 026 882**

## Description

The present invention relates to a method and a system for making ice cream on a stick and a machine for making and dispensing a processed liquid or semiliquid product suitable for forming ice cream on a stick.

Ice creams on a stick are ice creams consisting of a bar of ice cream, embedded in which there is a portion of a stick, usually made of wood or plastic, which serves as a hand grip.

In the technical field in question, the ice cream is produced by directly inserting a base liquid or semiliquid mixture into a mould which defines cavities for containing a liquid or partially liquid product.

The mould is subjected to abrupt cooling, at relatively low temperatures, in order to cause the base mixture to freeze and thus obtain the finished product.

The base liquid or semiliquid mixture is usually subjected to a pasteurisation treatment before being introduced into the mould.

An operator introduces the base liquid or semiliquid mixture into the mould by means of a pitcher, for example he/she introduces a sweetened milk-based mixture.

A particularly felt need in the sector in question is that of obtaining an ice cream type product on a stick endowed with a high overrun, i.e. which incorporates a particularly high percentage of air.

In fact, the method used up to now does not enable one to obtain an ice cream on a stick type product endowed with a high overrun.

Document EP1597974A1 discloses a method for manufacturing a moulded ice confectionery article comprising a mould and a nozzle to release a mixture of basic product in the mould which is vertically movable during the filling of the mould.

Document US2001/009097A1 shows a device (and a method) for producing frozen confectionery articles comprising a hopper and a metering dispensing element which is provided with a metering nozzle. The hopper is pressurized and the metering chamber is filled without the formation of air pockets.

Document WO99/03358 A1 discloses an apparatus for simultaneously making multiple separate individual portions of fresh frozen yogurt or ice cream for immediate serving comprising: a counter table containing a battery of at least three miniature batch type ice cream making machines comprising open rotating containers provided with scrapers means, each container having a capacity of 800 ml or less, to accommodate up to 250 ml ice cream mix, and means for refrigerating said rotating containers sufficiently to produce in each container individual portions of ice cream for dispensing from the open rotating container.

Document US3261178 A discloses a freezer for ice-cream bars and the like, comprising a turntable mounted for rotation about an axis, a plurality of molds, engaging means on said turntable and on each mold securing the mold to the turntable for movement of the mold with the turntable in a closed path about said axis while permitting axial movement of the mold relative to the turntable; guide means for guiding said molds axially toward and away from said turntable in response to movement of the molds in said closed path; filling means for filling said molds with a material to be frozen; a refrigerating tank; unmolding means for removing the refrigerated material from said molds, said filling means, refrigerating tank, and unmolding means being circumferentially offset along said path in said sequence in the direction of movement of said molds.

Document EP 2541165 A1 discloses a natural coolant refrigerating plant comprising a motor-driven compressor with two compression stages, at least one jacket for heating and/or cooling a product being processed, an intercooler located upstream of the second compression stage and a gas-cooler located downstream of the outlet from the second compression stage. Moreover, the plant comprises a first branch, connecting the outlet of the gas-cooler with the inlet of the first stage of the motor-driven compressor for recovering a predetermined quantity of coolant. Document EP2491792 A1 discloses machine for making and dispensing liquid, semi-liquid and/or semi-solid food products comprising a cylinder for processing a mixture of a basic product and air, a chamber for the transit of a heat exchange fluid, the chamber being located around the cylinder, a dispensing tap and means for treating the heat exchange fluid and supplying it to the transit chamber; it is equipped with a flexible container for containing the basic product and housed in a rigid container; a compressor of a flow of pressurized air being designed to send pressurized air into the rigid container in such a way that it acts on the flexible container to cause the transfer of the basic product from the container to the processing cylinder through a feed tube.

Document US 2866420 A discloses an apparatus for generating a molded comestible with spiral layers of comestible material comprising means for ejecting streams of comestible, a mold adapted to receive the streams of comestible, means for positioning the mold in stream receiving relation with respect to the means for ejecting the comestible including a support for the mold adapted to be raised and lowered, means for raising the support with respect to the means for ejecting the comestible with the mold remaining stationary and means for simultaneously lowering and rotating the mold whereby spiral layers of the ejected streams of the comestible are formed within the mold.

Document GB2245474 A discloses a continuous cycle automatic machine for the production of ice creams and ice-lollies comprises a disc rotatable about an upright axis, moulds in said disc for receiving product to be frozen to produce such ice creams or lollies, refrigeration means for freezing said product as the disc is rotated, so that ice creams and ice-lollies with sticks may be produced, means for connecting to the drive of the first disc a second disc with moulds for receiving receptacle and product for producing lollies and ice creams without sticks and means above the discs for on the one hand inserting sticks in the moulds in the first disc, and on the other hand applying lids to said receptacles after being filled with product on the other hand as said first or second disc is rotated as the case may be. A machine may include a volatile mould sliding ring track, means for superficial heating of moulds and means for moving the product from the machine.

Document US2003/026882 A1 discloses a process for making confection compositions such as ice pops of gel consistency.

Document WO2005/099475 A1 discloses an apparatus and a method for producing ice confection, comprising a carousel arrangement which comprises a plurality of arms which are provided with a plurality of moulds having mould cavities for the moulding of ice confection, by which carousel arrangement are arranged process means for producing ice confection by advancing the arms between the process means for performing partial processes at a number of stations, moulds being placed with their openings oriented downwards at one or more of the stations.

Document US4759197 A discloses a machine for making ice creams, in particular ice creams of the stick-supported type, comprising a freezing tank through which parallel arranged rows of molds are made to progress intermittently under control of a pull chain, dosing, stick-inserting and product-lifting-up units. The pull chain is designed to be moved by an at least double step.

Document US5158506 A discloses a refrigeration controller for use with an apparatus for manufacturing soft-ice-cream and the like by beating and refrigerating at a preset temperature an ice-cream mix supplied from a hopper into refrigeration cylinders.

Document US3632245 A discloses an apparatus for forming frozen confections in which movable molds are conveyed through filling, freezing, stick inserting and extraction stations, the apparatus including opened topped molds arranged in transverse rows on a conveyor system, and compartments containing liquid confection compositions connected with delivery tubes arranged to deliver metered amounts of liquid compositions simultaneously into the molds of a transverse row wherein liquid compositions of different flavors are delivered into groups of molds as the rows of molds are successively moved through the filling station.

Document US 4699583 A discloses a machine for forming ice creams and/or popsicles or ice lollies with and without a holding stick, and comprising a freezing station and product metering and withdrawing units. Document GB2254035A1 discloses a mould filling apparatus, particularly for filling lollipop moulds, in which moulds are mounted in one or more trays removably supported by a frame. The tray or trays are arranged to be tilted from a level position to a tilted position where liquid in the moulds can flow freely out of the moulds into the tray or trays from whence the liquid may be drained by suitable means. A means for filling the moulds is provided.

Document EP 1249175 discloses an apparatus and the respective method for producing ice-creams with stick, covered, providing for: filling the moulds, become cold by means of previous production cycles, with the covering product, for example chocolate; suction of chocolate from the moulds so that only the desired layer of frozen product adheres to said moulds; filling of the mould with ice-cream or other edible product; insertion of the stick before the starting of the freezing of the top or during or soon afterwards; gas freezing of the product top for obtaining a closing "plug" of the tub; starting of brine freezing that will end after the dosage of the closing plug; optionally measure such a chocolate layer or other edible product.

The object of the present invention is to satisfy the need expressed above by providing a machine, a system and a method enabling the production of ice cream on a stick.

In accordance with the invention, this object is achieved by a method and a system for making ice cream on a stick and a machine for making and dispensing a liquid or semiliquid product for making ice cream on a stick. The technical features of the invention, according to the aforesaid objects, are clearly inferable from the contents of the claims set forth below, and the advantages of the same will be more apparent from the detailed description that follows, made with reference to the appended drawings, which represent a purely illustrative, non-limiting embodiment, in which:

- figure 1 illustrates a perspective view of the machine and system of the present invention according to a first embodiment;
- figure 2 illustrates a perspective view of the machine and system of the present invention in accordance with a second embodiment;
- figure 3 illustrates a perspective view of the machine and system of the present invention in accordance with a third embodiment.

It should be observed that in the appended figures, the proportions of the graphic elements are not representative of those of the real elements: in particular, the machine 1 has been deliberately drawn on an enlarged scale.

According to the invention, a method for making ice cream on a stick is defined.

The method of the invention comprises the following steps:

- subjecting a liquid or semiliquid base product to cooling and stirring inside a container 2 to obtain a processed liquid or semiliquid product;
- drawing the processed product from the container 2 to fill cavities 4 of a mould 3;
- inserting sticks (preferably made of plastic material or wood) into the mould 3;
- cooling the mould 3, filled with the processed product and containing the sticks, to obtain ice creams on a stick.

This method can be implemented by a machine 1 for making and dispensing a processed liquid or semiliquid product for ice cream on a stick and by a system 20 for making ice cream on a stick.

A machine 1 for making and dispensing a processed liquid or semiliquid product for ice cream on a stick (also part of the subject matter of the invention) and a system 20 (also part of the subject matter of the invention) for making ice cream on a stick are described below.

The machine 1 for making and dispensing a processed liquid or semiliquid product for ice cream on a stick comprises a container 2 for containing a liquid or semiliquid base product.

It should be observed that the liquid or semiliquid base product preferably comprises a milk-based mixture.

The machine 1 according to the invention comprises a unit 10 for mixing and cooling the liquid or semiliquid base product; it is associated with the container 2 to allow the base product to be mixed and cooled in the container 2 in such a way as to obtain a liquid or semiliquid processed product.

It should be observed that the mixing and cooling unit 10 comprises a thermal treatment system and a stirrer 6.

The stirrer 6 is operatively active on the base product so as to achieve a mixing of the same.

The thermal treatment system comprises a circuit in which an operative (refrigerant) fluid is active.

It should be observed that the thermal treatment system is preferably configured to carry out a thermal cycle via the refrigerant fluid.

In particular, the thermal treatment system is preferably configured so as to define a cooling cycle.

The thermal treatment system preferably comprises the following components associated with the circuit:

- first heat exchange means (an evaporator) operatively active on the container 2 in order to achieve a heat exchange between the operating fluid and base product inside the container 2 so as to cool the base product inside the container 2;
- second heat exchange means (a condenser) for cooling the operating fluid;
- a compressor, operatively active on the refrigerant fluid in order to increase the pressure thereof and disposed in the circuit between the first and the second heat exchange means;
- means for reducing the pressure of the fluid (a thermal expansion valve), operatively active on the refrigerant fluid in order to decrease the pressure thereof and disposed in the circuit between the second and the first heat exchange means.

The machine 1 further comprises, according to the invention, extraction means 11 for extracting the processed liquid or semiliquid product, able to be coupled to, and uncoupled from, the container 2 so as to allow the processed product to be drawn from the container 2 and configured to allow an operator to release the processed product into cavities 4 of a mould 3 for making ice cream on a stick.

Preferably, the extraction means 11 for extracting the processed liquid or semiliquid product comprise a hose 9, connectable to the container 2 to allow the processed liquid or semiliquid base product to be extracted from the container 2 itself.

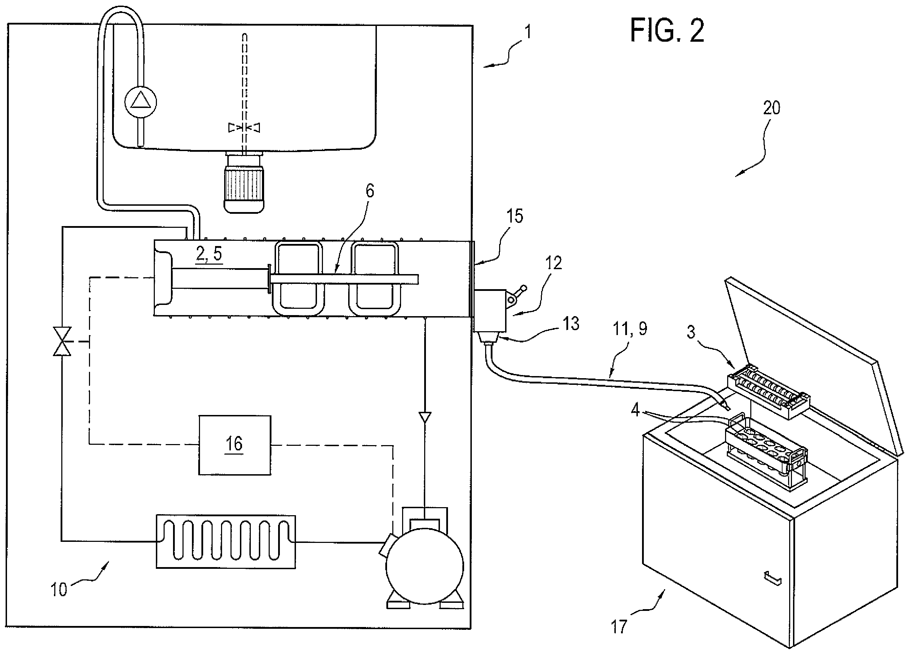

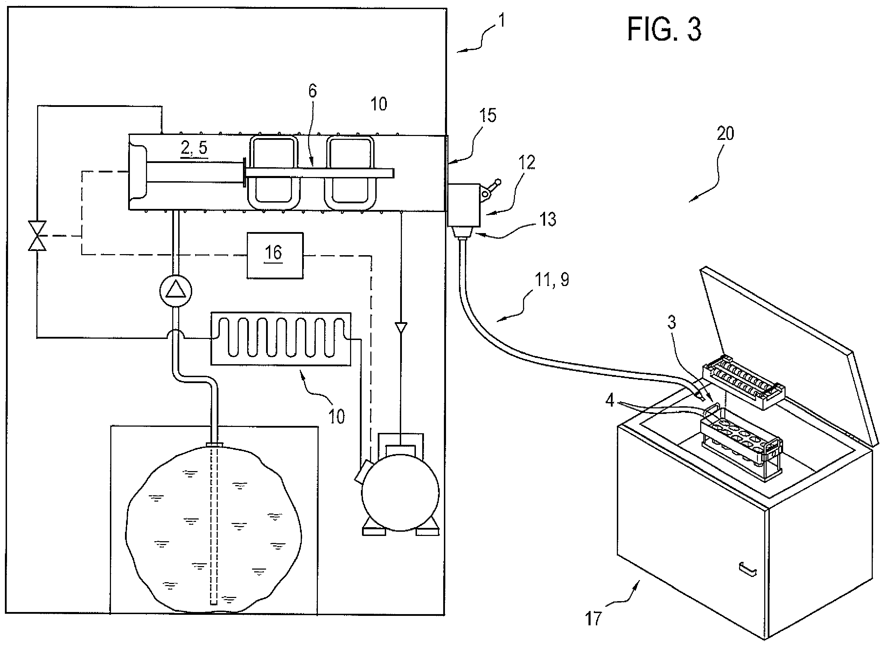

The embodiment of the machine 1 illustrated in figures 2 and 3 will now be described.

According to this embodiment, the machine 1 preferably comprises a dispenser 12 coupled to the container 2 to allow a user to draw the processed product from the container 2 and to dispense the selfsame processed product.

In accordance with this embodiment, the machine 1 comprises means 13 for coupling the hose 9 to the dispenser 12.

Preferably, the hose 9 is a rubber hose.

It should be observed that, according to this aspect, the hose 9 is coupled to the container 2 via the dispenser 12.

According to the invention, as illustrated in the example of figures 2 and 3, the container 2 is defined by a batch freezing cylinder 5, comprising a door 15 for closing and isolating the container 2 from the outside atmosphere.

It should be observed that the batch freezing cylinder 5 is provided with an internal chamber for processing and mixing the base material.

The batch freezing cylinder 5 is directly cooled by the thermal treatment system.

In particular, one of the exchangers (evaporator) of the thermal treatment system is coupled to the batch freezing cylinder 5.

It should be observed that, preferably, the exchanger (evaporator) is disposed in such a way as to cool the lateral wall of the batch freezing cylinder 5.

In particular, according to this embodiment, the stirrer 6 is configured to scrape at least part of the lateral walls of the batch freezing cylinder 5.

Preferably, in accordance with this embodiment implementing the method, the step of subjecting a liquid or semiliquid base mixture to cooling and stirring inside a container 2 envisages a step of cooling the base product to a temperature comprised between -3°C and -15°C.

It should be observed, then, that the machine 1 comprises an electronic unit 16, configured to control one or more components of the thermal treatment system so as to cool the base product to a temperature comprised between -3°C and -15°C.

Therefore, according to the invention, the step of subjecting the liquid or semiliquid base product to cooling and stirring inside a container is carried out inside a batch freezing cylinder 5, which can be sealedly isolated from the outside atmosphere.

Moreover, according to this embodiment, the step of drawing the processed product from the container 2 to fill the mould 3 preferably comprises the step of switching on the stirrer 6 to facilitate outflow of the product from the container 2.

It should likewise be observed that during the step of subjecting the liquid or semiliquid base product to cooling and stirring, the pressure inside the batch freezing cylinder 5 is greater than the atmospheric pressure.

In particular, the pressure inside the batch freezing cylinder 5 is preferably comprised between 1.5 bar and 2.5 bar.

According to this embodiment, there is preferably envisaged a cooling combined with mixing of the base product inside the batch freezing cylinder 5.

More in general, according to the method, the step of subjecting the liquid or semiliquid base product to cooling and stirring preferably comprises a step of simultaneous cooling and mixing.

It should be observed that the batch freezing cylinder 5, according to the embodiment illustrated in figure 2, is fed (i.e. receives the base product) by means of an upper tank.

In contrast, the batch freezing cylinder 5, according to the embodiment illustrated in figure 3, is fed (i.e. receives the base product) by means of a bag-in-box type of container.

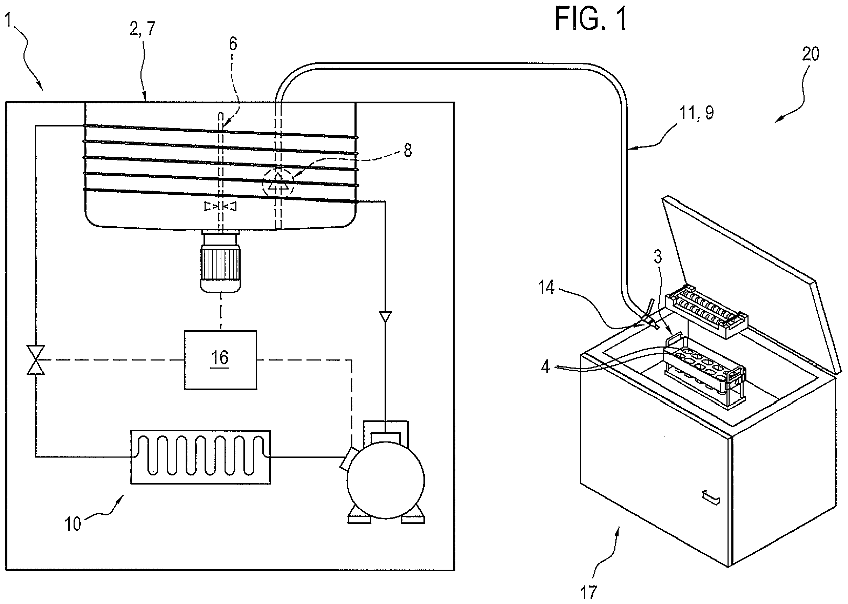

The embodiment illustrated in figure 1 will now be described.

In accordance with this embodiment, the container 2 is defined by a tank 7. It should be observed that the tank 7 comprises a stirrer 6.

According to another aspect, the hose 9 is equipped with closing means 14, which can be operated by the user to prevent the processed product from flowing in the hose 9.

It should be observed that, according to this aspect, the hose 9 comprises a mechanical device 14 for closing off the hose 9 itself, which allows the user to open and close the hose for dispensing the product.

Preferably, according to this embodiment, the machine 1 comprises a pump 8.

The pump 8 is configured to draw the processed product from the tank 7.

In particular, it may be observed, therefore, that the intake side of the pump 8 is connected to the tank 7, in particular to the bottom of the tank 7. In this embodiment, the hose 9 is connected to the delivery side of the pump 8.

It should be observed, then, that according to this embodiment of the method, the step of drawing the processed product from the container 2 to fill a mould 3 comprises a step of transferring the processed product through the pump 8.

In other words, the pump 8 is switched on to draw the processed product from the container 2 and fill cavities 4 of a mould 3: in fact the pump 8 generates the necessary head for transferring the processed product through the hose 9.

Likewise defined according to the invention is a system 20 for making ice cream on a stick, comprising;

- a machine 1 for making and dispensing a processed liquid or semiliquid product so as to obtain ice cream on a stick, already described previously;
- a mould 3 provided with a plurality of cavities 4 which can be filled with the processed liquid or semiliquid product;
- a cooling unit 17 for the mould 3, configured to allow cooling of the mould 3 (with the cavities 4 filled with the processed product and containing a stick) to a temperature such as to allow the processed product to solidify inside the cavities 4, so as to obtain ice creams on a stick.

It should be observed that the cooling unit 17 for the mould 3 is configured to allow the processed product to be cooled to a temperature below -15°C (preferably comprised between -15°C and -35°C).

It should be observed that, even more preferably, the cooling unit 17 for the mould 3 is configured to allow the processed product to be cooled to a temperature below -20°C (preferably comprised between -20°C and -35°C).

It should be observed that, in the illustrated figures, the mould 3 is filled with a processed liquid or semiliquid product when the mould 3 is placed inside the cooling unit 17.

Alternatively, the mould 3 is filled with a processed liquid or semiliquid product when the mould 3 is placed outside the cooling unit 17 and the mould 3 is placed inside the cooling unit 17 after being filled.

After filling, a stick support element supporting a plurality of sticks is coupled to the mould 3, so that a stick is placed in each cavity 4 filled with product.

Preferably, the cooling unit 17 for the mould 3 is a rapid temperature reducing unit.

The expression "rapid temperature reducing unit" means a unit equipped with a cooling system configured to enable the product inside it to be cooled in an extremely rapid and fast manner.

Preferably, the rapid temperature reducing unit is provided with a compartment for accommodating the mould and a door which can be opened and closed to allow access to the compartment.

Preferably, the evaporator of the cooling system is configured to cool the compartment.

According to the invention, the machine 1 enables a mixture to be obtained which is particularly suitable for making ice creams on a stick.

In particular, experimental tests have enabled technical personnel to observe that the ice cream on a stick obtained by means of the method of the invention, or by means of the system 20, is endowed with a high overrun, i.e. incorporates a large amount of air, which improves its sensory qualities.

It should be observed that overrun means:

$$\frac{\text{WEIGHT OF MIXTURE} - \text{WEIGHT OF ICE CREAM}}{\text{WEIGHT OF ICE CREAM}} \times 100$$

Therefore, the processed product obtained by means of the machine 1 makes it possible, compared to traditional methods of making ice cream on a stick, to obtain ice cream on a stick endowed with a high overrun, i.e. which incorporates a large amount of air.

In particular, it should be observed that the method implemented according to the embodiment in figure 1 allows a large amount of air to be incorporated: in fact the action of the pump 8 causes a sort of emulsion of air in the processed liquid to be created, or, in other words, it favours the incorporation of air.

Therefore, advantageously, the machine 1, the system 20 and the method according to the invention makes it possible to obtain an ice cream on a stick endowed with high quality characteristics.

**Claims**

1. A method for making ice cream on a stick, **characterized in that** it comprises the following steps:

    - subjecting a liquid or semiliquid base product to cooling and stirring inside a container (2) to obtain a processed liquid or semiliquid product;
    - drawing the processed product from the container (2) to fill cavities (4) of a mould (3);
    - inserting sticks in the mould (3);
    - cooling the mould (3), filled with the processed product and containing the sticks, to obtain ice creams on a stick, wherein the step of cooling the mould (3) filled with the processed product and containing the stick comprises a step of cooling the processed product to a temperature below -20°C inside a compartment of a cooling unit (17) for the mould (3), said cooling unit (17) for the mould being provided with a compartment for accommodating the mould (3) and a door which can be opened and closed to allow access to the compartment, said cooling unit (17) for the mould (3) being equipped with a cooling system configured to allow cooling the mould (3), with the cavities (4) filled with the processed product and each containing a stick, wherein the step of subjecting a liquid or semiliquid base product to cooling and stirring inside a container is performed in a batch freezing cylinder (5) which can be sealedly isolated from the outside atmosphere.

2. The method according to the preceding claim, wherein the step of drawing the processed product from the container (2) to fill a mould (3) comprises a step of transferring the processed product through a pump (8).

3. The method according to any of the preceding claims, wherein the step of drawing the processed product from the container (2) to fill a mould (3) is performed through a hose (9) connectable to the container (2).

4. The method according to any of the preceding claims, wherein the step of subjecting a liquid or semiliquid base mix to cooling and stirring inside a container (2) comprises cooling the base product to a temperature below -3°C.

5. The method according to any of the preceding claims, wherein the step of subjecting a liquid or semiliquid base mix to cooling and stirring inside a container (2) comprises cooling the base product to a temperature between -3°C and -15°C.

6. The method according to any of the preceding claims, wherein the step of subjecting a liquid or semiliquid base mix to cooling and stirring inside a container (2) comprises cooling the base product to a temperature between -3°C and -8°C.

7. The method according to any of the preceding claims, wherein the step of cooling the mould (3) filled with the processed product and containing the stick comprises a step of cooling the base product to a temperature of between -35°C and -20°C.

8. A system (20) for making ice cream on a stick, comprising:

- a machine (1) for making and dispensing a liquid or semiliquid product for ice cream on a stick; **characterized in that** it comprises:
- a container (2) for containing a liquid or semiliquid base product, said container (2) being defined by a batch freezing cylinder (5), comprising a door (15) for closing and isolating the container (2) from the outside atmosphere:
- a mixing and cooling unit (10) comprising a stirrer (6) and a thermal treatment system configured to mix and cool the liquid or semiliquid base product, and associated with the container (2) to allow the base product to be mixed and cooled in the container (2) in such a way as to obtain a liquid or semiliquid processed product;
- a mould (3) provided with a plurality of cavities (4) to be filled with the processed liquid or semiliquid product;
- extraction means (11) comprising a hose 9, connectable to the container 2 to allow the processed liquid or semiliquid base product to be extracted from the container 2 itself and to be released into the cavities (4) of the mould (3) for making ice cream on a stick;
- a cooling unit (17) for the mould (3), provided with a compartment for accommodating the mould (3) and a door which can be opened and closed to allow access to the compartment, said cooling unit being equipped with a cooling system configured to allow cooling the mould (3), with the cavities (4) filled with the processed product and each containing a stick, to a temperature below -20°C such as to allow the processed product to solidify so as to obtain ice creams on a stick.

9. The system according to the preceding claim, comprising a dispenser (12) coupled to the container (2) to allow a user to draw the processed product from the container (2) and to dispense the selfsame processed product, and comprising means (13) for coupling the hose (9) to the dispenser (12), the hose (9) being coupled to the container (2) through the dispenser (12).

10. The system according to claim 8 or 9, wherein the container (2) comprises a stirrer (6) configured to scrape at least a portion of the walls of the container (2).

11. The system according to any of the preceding claims from 8 to 104-2, comprising an electronic control unit (16) for the mixing and thermal treatment unit (10), configured to control the mixing and thermal treatment unit (10) in such a way as to allow the base product to be cooled to a temperature below -3°C.

**Patentansprüche**

1. Verfahren zur Herstellung von Speiseeis an einem Stiel, **dadurch gekennzeichnet, dass** es die folgenden Schritte umfasst:

- Unterziehen eines flüssigen oder halbflüssigen Basisprodukts dem Kühlen und Rühren in einem Behälter (2), um ein verarbeitetes flüssiges oder halbflüssiges Produkt zu erhalten;
- Ansaugen des verarbeiteten Produkts aus dem Behälter (2), um Hohlräume (4) einer Form (3) zu füllen;
- Einführen von Stielen in die Form (3);
- Kühlen der mit dem verarbeiteten Produkt gefüllten und die Stiele enthaltenden Form (3), um Speiseeis an einem Stiel zu erhalten, wobei der Schritt zum Kühlen der mit dem verarbeiteten Produkt gefüllten und die Stiele enthaltenden Form (3) einen Schritt zum Kühlen des verarbeiteten Produkts auf eine Temperatur von unter -20 C in einer Unterteilung einer Kühleinheit (17) für die Form (3) umfasst, wobei die Kühleinheit (17) für die Form mit einer Unterteilung versehen ist, um die Form (3) unterzubringen, und mit einer Tür, die geöffnet und geschlossen werden kann, um den Zugriff auf die Unterteilung zu erlauben, wobei die Kühleinheit (17) für die Form (3) mit einem Kühlsystem ausgestattet ist, das ausgelegt ist, um das Kühlen der Form (3) mit den mit dem verarbeiteten Produkt gefüllten Hohlräumen (4), die jeweils einen Stiel enthalten, zu erlauben, wobei der Schritt zum Unterziehen eines flüssigen oder halbflüssigen Basisprodukts dem Kühlen und Rühren in einem Behälter in einem Chargengefrierzylinder (5) durchgeführt wird, der abgedichtet von der außenseitigen Atmosphäre getrennt werden kann.

2.  Verfahren nach dem vorhergehenden Anspruch, wobei der Schritt zum Ansaugen des verarbeiteten Produkts aus dem Behälter (2), um eine Form (3) zu füllen, einen Schritt zum Transferieren des verarbeiteten Produkts durch eine Pumpe (8) umfasst.

3.  Verfahren nach einem der vorhergehenden Ansprüche, wobei der Schritt zum Ansaugen des verarbeiteten Produkts aus dem Behälter (2), um eine Form (3) zu füllen, mittels eines Schlauchs (9) durchgeführt wird, der an den Behälter (2) angeschlossen werden kann.

4.  Verfahren nach einem der vorhergehenden Ansprüche, wobei der Schritt zum Unterziehen einer flüssigen oder halbflüssigen Basismischung dem Kühlen und Rühren in einem Behälter (2) das Kühlen des Basisprodukts auf eine Temperatur von unter -3 C umfasst.

5.  Verfahren nach einem der vorhergehenden Ansprüche, wobei der Schritt zum Unterziehen einer flüssigen oder halbflüssigen Basismischung dem Kühlen und Rühren in einem Behälter (2) das Kühlen des Basisprodukts auf eine Temperatur zwischen -3 C und -15 C umfasst.

6.  Verfahren nach einem der vorhergehenden Ansprüche, wobei der Schritt zum Unterziehen einer flüssigen oder halbflüssigen Basismischung dem Kühlen und Rühren in einem Behälter (2) das Kühlen des Basisprodukts auf eine Temperatur zwischen -3 C und -8 C umfasst.

7.  Verfahren nach einem der vorhergehenden Ansprüche, wobei der Schritt zum Kühlen der mit dem verarbeiteten Produkt und den Stiel enthaltenden Form (3) einen Schritt zum Kühlen des Basisprodukts auf eine Temperatur zwischen -35 C und -20 C umfasst.

8.  System (20) zur Herstellung von Speiseeis an einem Stiel, umfassend:

    - eine Maschine (1) zur Herstellung und Ausgabe eines flüssigen oder halbflüssigen Produkts für Speiseeis an einem Stiel, **dadurch gekennzeichnet, dass** sie umfasst:
    - einen Behälter (2) zum Enthalten eines flüssigen oder halbflüssigen Basisprodukts, wobei der Behälter (2) durch einen Chargengefrierzylinder (5) definiert ist, umfassend eine Tür (15) zum Verschließen und Trennen des Behälters (2) von der außenseitigen Atmosphäre;
    - eine Misch- und Kühleinheit (10), umfassend ein Rührwerk (6) und ein thermisches Behandlungssystem, ausgelegt, um das flüssige oder halbflüssige Basisprodukt zu vermischen und zu kühlen, und assoziiert mit dem Behälter (2), um zu erlauben, dass das Basisprodukt im Behälter (2) vermischt und gekühlt werden kann, sodass ein verarbeitetes flüssiges oder halbflüssiges Produkt erhalten wird;
    - eine Form (3), versehen mit einer Vielzahl an Hohlräumen (4), die mit dem verarbeiteten flüssigen oder halbflüssigen Produkt zu füllen sind;
    - Extraktionsmittel (11), umfassend einen Schlauch 9, der an den Behälter 2 angeschlossen werden kann, um zu erlauben, dass das verarbeitete flüssige oder halbflüssige Basisprodukt aus dem Behälter 2 extrahiert und in die Hohlräume (4) der Form (3) zur Herstellung von Speiseeis an einem Stiel freigesetzt wird;
    - eine Kühleinheit (17) für die Form (3), die mit einer Unterteilung versehen ist, um die Form (3) unterzubringen, und mit einer Tür, die geöffnet und geschlossen werden kann, um den Zugriff auf die Unterteilung zu erlauben, wobei die Kühleinheit mit einem Kühlsystem ausgestattet ist, das ausgelegt ist, um das Kühlen der Form (3) mit den mit dem verarbeiteten Produkt gefüllten Hohlräumen (4), die jeweils einen Stiel enthalten, auf eine Temperatur von unter -20 C zu erlauben, sodass dem verarbeiteten Produkt erlaubt wird, sich zu verfestigen, sodass Speiseeis an einem Stiel erhalten wird.

9.  System nach dem vorhergehenden Anspruch, umfassend eine Ausgabevorrichtung (12), die mit dem Behälter (2) gekuppelt ist, um einem Nutzer zu erlauben, das verarbeitete Produkt aus dem Behälter (2) anzusaugen und das verarbeitete Produkt auszugeben, und umfassend Mittel (13) zum Kuppeln des Schlauchs (9) mit der Ausgabevorrichtung (12), wobei der Schlauch (9) mit dem Behälter (2) über die Ausgabevorrichtung (12) gekuppelt ist.

10. System nach Anspruch 8 oder 9, wobei der Behälter (2) ein Rührwerk (6) umfasst, das ausgelegt ist, um mindestens einen Abschnitt der Wände des Behälters (2) abzuschaben.

11. System nach einem der vorhergehenden Ansprüche 8 bis 10, umfassend ein elektronisches Steuergerät (16) für die Misch- und thermische Behandlungseinheit (10), das ausgelegt ist, um die Misch- und thermische Behandlungseinheit (10) zu steuern, sodass dem Basisprodukt erlaubt wird, auf eine Temperatur von unter -3 C abgekühlt zu werden.

**Revendications**

1. Procédé pour confectionner une crème glacée sur un bâtonnet, **caractérisé en ce qu'**il comprend les étapes suivantes :

- soumettre un produit liquide ou semi-liquide de base à un refroidissement et une agitation à l'intérieur d'un récipient (2) pour obtenir un produit liquide ou semi-liquide transformé ;
- soutirer le produit transformé du récipient (2) pour remplir des cavités (4) d'un moule (3) ;
- introduire des bâtonnets dans le moule (3) ;
- refroidir le moule (3), rempli avec le produit transformé et contenant les bâtonnets, pour obtenir des crèmes glacées sur un bâtonnet, dans lequel l'étape consistant à refroidir le moule (3), rempli de produit transformé et contenant le bâtonnet, comprend une étape consistant à refroidir le produit transformé à une température inférieure à -20°C à l'intérieur d'un compartiment d'une unité de refroidissement (17) pour le moule (3), ladite unité de refroidissement (17) pour le moule étant pourvue d'un compartiment servant à loger le moule (3) et d'une porte pouvant être ouverte et fermée pour permettre l'accès au compartiment, ladite unité de refroidissement (17) pour le moule (3) étant équipée d'un système de refroidissement configuré pour permettre le refroidissement du moule (3), avec les cavités (4) remplies avec le produit transformé et contenant chacune un bâtonnet,
dans lequel l'étape consistant à soumettre un produit liquide ou semi-liquide de base à un refroidissement et à une agitation à l'intérieur d'un récipient est réalisée dans un cylindre de congélation (5) de lot pouvant être isolé hermétiquement de l'atmosphère extérieure.

2. Procédé selon la revendication précédente, dans lequel l'étape consistant à soutirer le produit transformé du récipient (2) pour remplir un moule (3) comprend une étape consistant à transférer le produit transformé à travers une pompe (8).

3. Procédé selon l'une quelconque des revendications précédentes, dans lequel l'étape consistant à soutirer le produit transformé du récipient (2) pour remplir un moule (3) est réalisée à travers un tuyau (9) pouvant être relié au récipient (2).

4. Procédé selon l'une quelconque des revendications précédentes, dans lequel l'étape consistant à soumettre un mélange liquide ou semi-liquide de base à un refroidissement et à une agitation à l'intérieur d'un récipient (2) comprend le refroidissement du produit de base à une température inférieure à -3°C.

5. Procédé selon l'une quelconque des revendications précédentes, dans lequel l'étape consistant à soumettre un mélange liquide ou semi-liquide de base à un refroidissement et à une agitation à l'intérieur d'un récipient (2) comprend le refroidissement du produit de base à une température comprise entre -3 et -15°C.

6. Procédé selon l'une quelconque des revendications précédentes, dans lequel l'étape consistant à soumettre un mélange liquide ou semi-liquide de base à un refroidissement et à une agitation à l'intérieur d'un récipient (2) comprend le refroidissement du produit de base à une température comprise entre -3 et -8°C.

7. Procédé selon l'une quelconque des revendications précédentes, dans lequel l'étape consistant à refroidir le moule (3) rempli avec le produit transformé et contenant le bâtonnet comprend une étape consistant à refroidir le produit de base à une température comprise entre -35 et -20°C.

**8.** Système (20) pour confectionner une crème glacée sur un bâtonnet, comprenant :

- une machine (1) de fabrication et de distribution d'un produit liquide ou semi-liquide pour crème glacée sur un bâtonnet ; **caractérisé en ce qu'**il comprend :
- un récipient (2) pour contenir un produit liquide ou semi-liquide de base, ledit récipient (2) étant défini par un cylindre de congélation (5) de lot, comprenant une porte (15) pour fermer et isoler le récipient (2) de l'atmosphère extérieure ;
- une unité de mélange et de refroidissement (10) comprenant un agitateur (6) et un système de traitement thermique configuré pour mélanger et refroidir le produit liquide ou semi-liquide de base, et associée au récipient (2) pour permettre au produit de base d'être mélangé et refroidi dans le récipient (2) de manière à obtenir un produit liquide ou semi-liquide transformé ;
- un moule (3) pourvu d'une pluralité de cavités (4) à remplir avec le produit liquide ou semi-liquide transformé ;
- des moyens d'extraction (11) comprenant un tuyau 9 pouvant être relié au récipient 2 pour permettre au produit liquide ou semi-liquide transformé de base d'être extrait du récipient 2 lui-même et d'être relâché dans les cavités (4) du moule (3) pour confectionner de la crème glacée sur un bâtonnet ;
- une unité de refroidissement (17) pour le moule (3), pourvue d'un compartiment servant à loger le moule (3) et d'une porte pouvant être ouverte et fermée pour permettre l'accès au compartiment, ladite unité de refroidissement étant équipée d'un système de refroidissement configuré pour permettre le refroidissement du moule (3), avec les cavités (4) remplies de produit transformé et contenant chacune un bâtonnet, à une température inférieure à -20°C de manière à permettre au produit transformé de se solidifier de sorte à obtenir des crèmes glacées sur un bâtonnet.

**9.** Système selon la revendication précédente, comprenant un distributeur (12) couplé au récipient (2) pour permettre à un utilisateur de soutirer le produit transformé du récipient (2) et pour distribuer le même produit transformé, et comprenant des moyens (13) pour accoupler le tuyau (9) au distributeur (12), le tuyau (9) étant couplé au récipient (2) à travers le distributeur (12).

**10.** Système selon la revendication 8 ou 9, dans lequel le récipient (2) comprend un agitateur (6) configuré pour racler au moins une partie des parois du récipient (2) .

**11.** Système selon l'une quelconque des revendications précédentes de 8 à 10, comprenant une unité de commande (16) électronique pour l'unité de mélange et de traitement thermique (10) configurée pour commander l'unité de mélange et de traitement thermique (10) de manière à permettre au produit de base d'être refroidi à une température inférieure à -3°C.

FIG. 1

EP 2 801 261 B1

FIG. 2

FIG. 3

EP 2 801 261 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1597974 A1
- US 2001009097 A1
- WO 9903358 A1
- US 3261178 A
- EP 2541165 A1
- EP 2491792 A1
- US 2866420 A
- GB 2245474 A

- US 2003026882 A1
- WO 2005099475 A1
- US 4759197 A
- US 5158506 A
- US 3632245 A
- US 4699583 A
- GB 2254035 A1
- EP 1249175 A